# EUROPEAN PATENT APPLICATION

(11) **EP 1 411 614 A1**
(43) Date of publication of application: **21.04.2004**
(21) Application number: 03012994.4
(22) Date of filing: 10.06.2003
(51) Int. Cl.: H02J 7/02, H02J 7/00, F21L 4/08

(54) **Miniature LED lamp with rechargeable cell**

(30) Priority: 17.10.2002 IT GO20020002
(71) Applicant: C.E.I.N. s.r.l., 34074 Monfalcone (GO) (IT)
(72) Inventor: Cassaro, Mario, 34070 Monfalcone (GO) (IT); Harland, Bryan, 34070 Monfalcone (GO) (IT)

(57) **Abstract**

SUMMARY: The invention deals with lightening apparatus with led supplied by rechargeable cell of small size fit to be placed in very small spaces, for instance the space of a single Italian standard socket outlet. This socket is typically mounted in Italian standard wall boxes and fixed as a single module in the window of the supporting frames. Characteristics are: the device is easy to manufacture, easy to install, it has low electrical consumption, long endurance, long life, very small size. The invention can be applied as courtesy, safety and emergency light.

## Description

### SUMMARY:

The invention deals with lightening apparatus with led supplied by rechargeable cell of small size fit to be placed in very small spaces, for instance the space of a single Italian standard socket outlet. This socket is typically mounted in Italian standard wall boxes and fixed as a single module in the window of the supporting frames. Characteristics are: the device is easy to manufacture, easy to install, it has low electrical consumption, long endurance, long life, very small size. The invention can be applied as courtesy, safety and emergency light.

### STATE OF ART:

Because of the complex electrical plant engineering and the number of the breakers against damages and failures, the black-out probability in the living spaces is high. In this case an extra lightening for courtesy and emergency, independent form the main supply improves comfort and safety. It permits everyone to act, move itself or go out from internal areas, and get fast to a safe area.

Today, in particular, devices with small lamps supplied by internal floating cells are made in order to assure a sufficient light in the room and similar spaces.

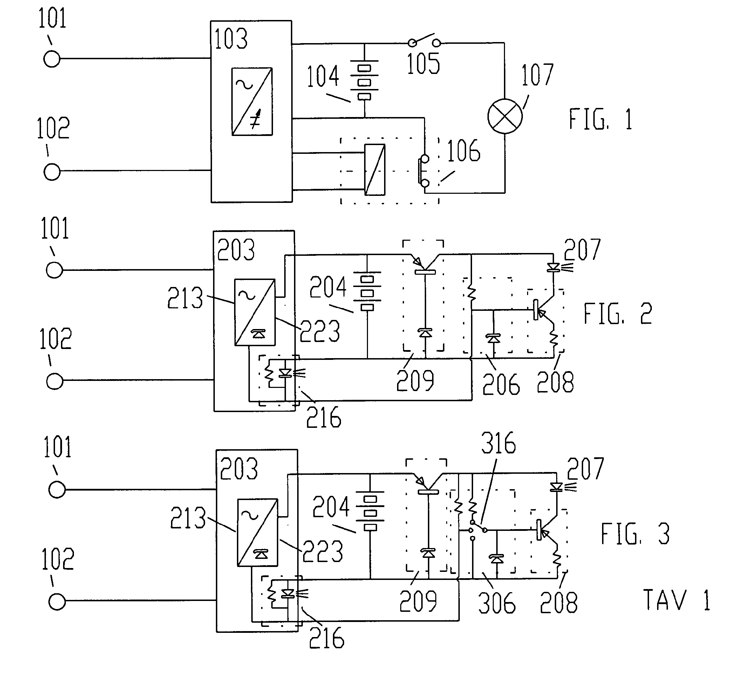

To explain how they work, look at fig. 1 at tab. 1 which shows the functional electrical circuit. From an electrical plant - part of a main electrical plant - in which can happen voltage lack i.e. for automatic trip of circuit breakers, failures, emergencies, catastrophic situations - self-supplied emergency lamps are derived. These emergency lamps switch on in case of voltage lack of the main supply. Assuming the engineering of the plant as known, then look the figure 1. The terminal 101, 102, are usually wired to a 110 - 220 V a.c. plant. The 103 converter change the main power in a proper voltage and current to recharge the 104 cell. A 106 normally-closed-contact relay, is excited in presence of the main voltage and do not permit the current to flow in the 107 lamp. The 105 jumper, when open, keep the 104 cell insulated by the rest of the circuit. Normally the 105 jumper is closed at the first installation of the lamp, and opened for long periods of absence of supply (I.e. for the main plant complete switch off; for storage, etc.) to avoid damages of the 104 cell for it complete discharge . When 101, 102 terminals are powered, the coil of the 106 relay is excited and the status of the lamp is off. When the power falls at the 101, 102 terminals, the 106 relay releases and closes the circuit, switching on the 107 lamp. When the 101, 102 terminals are powered back the lamp switches off and the 103 converter recharge the 104 cell.

Today in emergency plants fluorescent lamps or - for low power - incandescent lamps are used. These devices present the here said disadvantages. Here an example: the devices made to be installed in the wall boxes made in according with Italian socket standard and that have incandescent lamp as lightening source and the size of two or more modules. First of all the power absorption of the incandescent lamp is high, the filament life is limited, mostly in presence of vibrations. The efficiency is poor. The high currents that flow in the filament reduce the efficiency of the cell - oversized and of higher capacity - without any advantages. The problems are: poor design, large size, low autonomy, expensive maintenance, short life and lamps fulminations. On sale there are devices to be put in two Italian standard modules (standard today). When installed on the frame, they occupies two contiguous modules of the electrical wallbox, making difficult their installation in rewamping existing plants/structures: it is hard to find boxes with double module/window free and in sequence. Advantages are so limited that the spread over the market is limited.

The invention here described (his body configuration included) overcomes these limits, presents advantages, features, performances very interesting like: smaller size, easier structure and application, optional controls, possibility of installation in existing box and single frame window. Installation and use are cheaper.

### DESCRIPTION OF THE INVENTION.

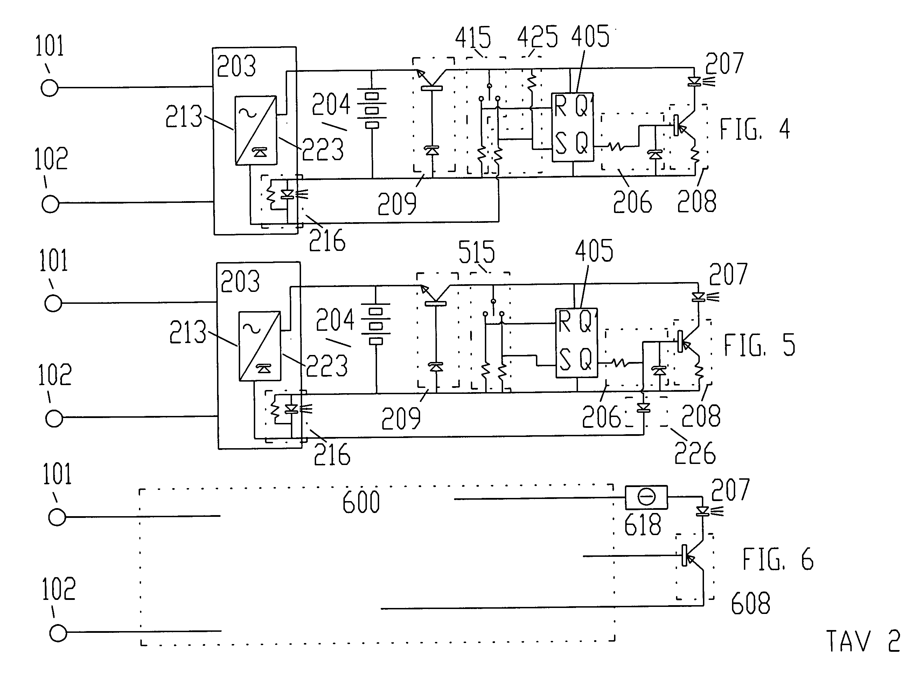

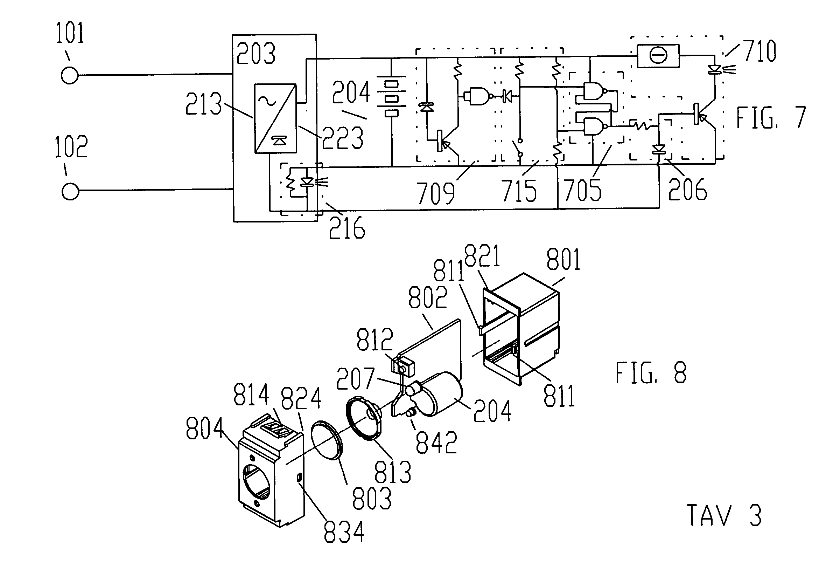

It is a "led light device powered by internal rechargeable cell", here described by explications, examples and drawings. To support the description, look at fig.2, 3 of tab. 1; fig 4, 5, 6, tab. 2; fig 7, 8 of tab. 3. An object represented in different pictures has always the same number. The hundreds numeral represent the figure where the object is shown for the first time, the unity represent the primary group, the tens represent the detail and the auxiliary of the group. The functional parts are represented in the groups omitting details of technical and of project solutions. Fig 2, tab. 1 shows the basic circuit and electrical and electronic features of the device. The invention is wired to the electrical light plant in terminals 101, 102. The 203 group usually converts the power from 220 V a.c. to a low voltage direct current, fit for the recharge of 204 cell and the supply of the control circuit. The 204 cell is designed for optimal size and energy, capacity ratio and for the circuit supply.

It is composed by a 213 step-down switching circuit or passive (capacitor-- resistance, transformer), which converts the voltage from 101, 102 terminals, usually 220 a.c. to the right rectified voltage. The 203 circuit receives the direct current and regulates it to properly recharge and to maintain in floating charge the 204 cell.

The 204 cell is rechargeable, with voltage and capacity fit for the 207 led absorption, because the remaining circuit absorption is intentionally marginal. The current during the cell recharging flows through 216 led-resistance group. The charge current, flowing the 206 polarization group led serves as pilot light, switches on automatically.

The voltage at the led cathode of 216 group switches the 208 group transistor in two states. The high state, corresponding to 216 pilot led switched off because of main voltage absence (so in case of current of charge of 204 cell equal to zero), in which the transistor base is freely biased by the 206 group zener. The low state corresponds to 216 led on, because it is passed by the current that recharge the cell 204, in which the transistor base (208 group) receives an interdiction voltage. 208 group is a current regulator circuit that supply a regulated current to the 207 led. Current is equal to zero for 216 switched on led (transistor base voltage in interdiction), or to the project current when the base goes to the voltage preset by 206 circuit values on 208 circuit parameter. The color of 207 led is concerned to the exigency, usually white high efficiency for emergency of courtesy illumination; red, green, yellow, blue, amber for advice, etc, typical of every color. The led light intensity is in relation of the current given by the 208 circuit. The 209 group is a switch which forbids the current absorption when the voltage of 204 cell decrease under a minimum value pre set by the voltage reference on 209 group. At the transistor base of 209 group is applied a limited voltage by voltage reference circuit with a right impedance represented as a zener.

When cell voltage decreases to discharged value, the base/source voltage of the transistor in group 209 decrease under saturation value, and then under the interdiction value. The 204 cell cannot discharge anymore trough the circuit, then the excess of discharge of 204 cell is avoided.

In fig. 3, tab. 1 there are variations of the invention as other example. Functions and basic structure remain the same. See that 206 group evolves into 306 groups which brings the 316 commutator. This 306 group controls manually the 207 led on. The 316 commutator: in the high position forces the 207 led to remain switched on; in the low position forces the 207 led to remain switched off without care of voltage status at 101, 102 terminals; in the central position to switch on when voltage fails at 101, 102 terminals and to switch off in presence of voltage at 101, 102 terminals. In fig. 4 tab. 2 there is another solution of the invention. Function and basic structure remains the same, such as the 203 charge circuit, 204 cell and led resistance of 216 polarization group. The fig.4 shows 206, 306 group replaced with 405 flip-flop and 415, 425 groups, that polarize 405 flip-flop state. In this example, the switch 425 is toggle. The 425 polarization allows the output Q of 405 flip-flop be high when the charge cell current do not flow through the 216 group. In this case, the high state of Q, through the 206 group polarize with the right voltage the base of the 208 circuit, then switch on the 207 led with the proper current.

The switching off of the 207 led depends on the configuration of 405 flip-flop: or when the voltage on 101,102 terminals come back or when a manual commutation of 425 switch to left, or for cell discharge and 209 circuit open.

In fig.5, tab.2 there is another example of the invention, with the same basic functions, but with the following differences. The switch of 515 group in right position forces manually the 405 flip-flop S input to high, then the Q output state to high. Then 207 led is enabled to be switched on trough 206, 216, 226, 208, 209 group when voltage between 101 and 102 terminals fails; also depending on the state of 204 cell, and enabling of 209 group for not discharged cell status. When the switch of 515 group is in left position, the 207 led is anyway forced to off. The fig.4, fig.5 solutions are oriented to the function of the invention as portable light and security light.

In fig. 6 there is another example of the invention. Function and basic structure remains the same of the above said examples, and bounced in 600 block. The 208 circuit is replaced by a 608 semiconductor, in on-off configuration. The 618 current regulator, normally an integrated circuit, regulates the current flow through 207 led. This solution makes easier the project and increases the light stability of 207 led.

In fig. 7, tab 3 there is another example of the invention. Functions remain the same of the above said examples. The 101 .... 204 blocks and 710 block are similar or equal to the solutions of the said examples. The solutions in fig. 7 is characterized by a logical chip with low power consumption and multi functions represented in 705, 709 blocks (in the case a quadruple NAND). The flip-flop created in the 705 block is properly biased by the voltage divider of 715 group. When the voltage at the 101, 102 terminals is correct the flip-flop output is high. The group 710 circuit is now enabled. 216, 206 group controls the block 710 led switching on of the led of the group 710. the 715 toggle forces the Q output of 705 flip-flop low. The 709 group is constituted by the reference voltage circuit of cell status discharge, represented i.e. by the zener and the transistor. When the voltage of 204 cell get down under the reference voltage, the transistor come to interdiction and the NAND switches to low the 709 group output. The 709 group pulls down the state of the 705 flip flop and its output. The flow of current of 710 group is interdicted.

The 709, 715, 705 circuit are designed in order to absorb in standby current lower than the typical self-discharged values of 204 cell. The solution is useful as reduce the voltage drop typical of the switches, and as the complete 204 cell voltage is applied to the circuit.

There are other solutions, with similar techniques, with same conditions and logics, and that concern them.

The invention is characterized by a led diode with high efficiency; by a cheap capacity cell in comparison with endurance and ageing; by a simple and low current logic; by a switch that minimize the absorption of the cell when discharged. These solutions optimize the efficiency of the cell, the use of small size electronic components or dye, world wide distribuited to day, the possibility of many optional functions.

Above all the invention is advantageous for the function of automatic activation at the first installation or after long periods of inactivity; for the circuit switched off to protect the cell when going to discharge.

The system is easy to make with range of characteristics wider than here said as: power supply between 101-102 terminals typical of 110, 220V, also low voltage circuits (tens of volts, volts), also voltage until maximal of the distribution plants. The range of the cell capacity goes from tens to thousands of mAh with discharge current from milliAmperes to hundreds milliAmperes with 207 led switched on, and fractions of milliAmperes/microAmperes when 207 led is off; with a continuous voltage of the cell and circuit in the range of Volts or tens Volt. -

The number of 207 led here shown as single, can be indefinitely increased also combining series configurations and parallel configurations.

In fig.8, tab3 is illustrated the invention completed by one of its possible body. The box is made by part 801, 804. The part 801 is the box itself, 804 is the front part with the adaptor to the designated frame standard.

In the invention the sizes, geometries, clamps, connections, mechanical solutions are compatible to frames, the body compatible with the specific standard modules and frames of electrical wallbox or universal.

The 801 universal box contains the 802 device as described before, and is coupled with 804 frontal, through 821 frame and locked with two 811 hooks. The 804 frontal has on back the 824 plug (of 821 frame). The 207 LED, located in 813 cup and the 803 transparent window, as lens and also as protection from spills, shocks and dust, to protect 207 LED and electrical and electronic circuit. The 204 cell, the 812 switch for changing of state as described before, the 842 LED pilot light, part of 216 group as described before. The 804 front brings the 834 locking notch of 811 hooks and the 814 clamps have a kleep in drawing and elasticity fit to the locking details on the standard socket and the frame where be mounted (that is not part of the invention and it is not illustrated). The 804 frontal fit to the standards and exigency for color and aesthetic. The external characteristic and sizes of the invention are fit to be inserted as to occupy only one Italian standard socket; from its standard sizes and other characteristic for technical, mechanical, dimensional, geometrical, electrical solutions are deduced.

So the invention has the advantages:
. a smaller capacity of the cell;
. a smaller size of the device properly manufacturable.

Typically the cell voltage range is 2,4 to 10 V, the cell capacity range is between 22 mAh and 60 mAh referring to the endurance of light for 1 to 3 hours at up to 0,5 lumen.

Typically the size is miniature, from mm 32x16x22 to mm. 55x30x40 in single module socket version.

The device can be made with larger cells capacity voltage and size when more endurance or higher light power is required, the geometry adapted to the installation space.

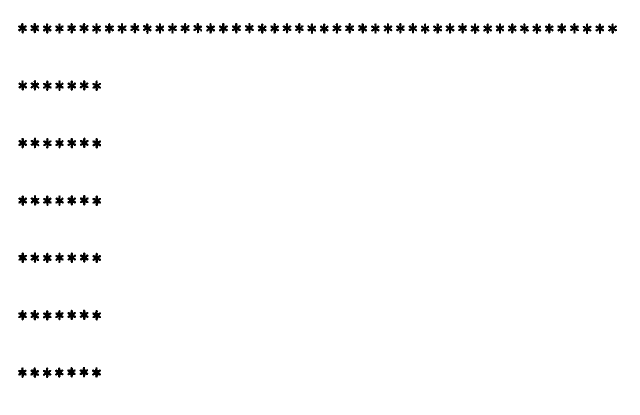

## Claims

1. LED lightening device including:
. a first LED (207);
. a rechargeable cell (204) to power the said first led (207);
. a charger circuit that connects the cell (213) and recharge the cell by an electrical plant (101, 102) with passive devices or with active devices;
**characterized by** the presence of:
. automatic turn-off devices (209) to block the current absorbption when the cell (204) voltage is lower than the preset;
. a cell recharge sensor including a second LED (216), being the said second LED (216), lighting on when the cell is supplied by the said electrical plant (101,102) and off when the said cell is not supplied by the electrical plant (101,102).

2. Lightening device, as said in claim 1, including a current regulator circuit (208)
. to supply the said first LED (207) with a pre-set current when the said second LED (216) is off;
. or, in opposite, with zero current when the said second led (216) is on.

3. Lightening device, as said in claim 1 including a current regulator (618) and a first transistor (608) in on-off, they in series to the first LED (207), where the base of the said transistor is connected to and controlled by the said sensor (216), so that the said transistor (608) turn on when the second LED (216) is off and turn off when the second led (216) is on.

4. Lightening device, as said in claim 2 where the current regulator circuit is made by the first said transistor (208), his collector is connected to the first LED (207), his base is connected and controlled by the second LED (216) :
. or intredicted when the second LED(216) is on,
. or let free to go to the voltage set by the base voltage regulator (206) when the second LED (216) is off.

5. Lightening device, as said in one or more previous claims, where a voltage regulator (209) and a second transistor (209) in series between the said cell (204) and the components: first led, other loads, where the said second transistor goes into the interdiction and disconnect the cell (204).

6. Lightening device, as said in one or more previous claims where, referring to the claims 4 and 5 the voltage levels or the voltage regulators are made by a zener diodes or with voltage regulator circuits or voltage reference circuits.

7. Lightening device, as said in one or more previous claims, including manual controls (415, 515, 715) of the on/off of the said first LED (207), - with toggle or steady switches - that operate the said LED (207):
. or always lightened on;
. or always lightened off,
. or lightened on/off as controlled by the (216) cell charger;
. or force the device circuits to unpowered and the said LED (207) off until there is no power available from the plant (101, 102).

8. Lightening device, as said in one or more previous claims, the cell recharge sensor automatically activate the said functions of the device after a deactivation (automatic for empty cell or manual) or at the first connection to the power plant (101, 102)

9. Lightening device, as said in one or more previous claims that includes in the circuits:
. voltage comparators and voltage reference (609, 709, 715)
. Flip-flop (integrated) (405) or gates in bistable circuits (705) made to operate the functions described in the text, in one or more previous claims, or as the claims 7 and 8; the said sensors (216, 209), described switches (415; 715) connected directrly or via comparators (709) to:
. the inputs of said flip-flop (405);
. the inputs of the logical gates connected in bistabile (605, 705);
the said filp-flop (405), gates (605, 705) output connected to the current control circuits (206, 208, 608) in series to the first led (207)

10. Lightening device, as said in one or more previous claims including the box (fig. 8) fit to contain the circuits with functions and characteristics said in one or more previous claim (802), where the box is made as in fig. 8 by:
. the body (801), and/or the adaptor frame (821), and/or the clamps (811) to the front plugs (834),
. the front (804) with the transparent window (803) and the reflector (813) of the said first LED (207),
. the said box (fig. 8) size is miniature, from mm 32x16x22 to mm. 55x30x40,
. the face (804), has the clamps/kleeps (814), fit to be mounted as a single module socket of standard electrical wall boxes,
. the said box (fig. 8) fit as a single socket module of standard frames in electrical wallboxes;
and where the card (802) includes:
. the circuit of electrical, electronic (802) optoelectonic devices (207, 842), switches (812), and cell/cells (204)
. the said cell (204) capacity is between 22 mAh and 60 mAh and the voltage between 2,4 and 10 V referring to an endurance of light between 0,5 to 4 hours;
. the light power output of the first said LED (207) is at 0,5 lumen.

11. Lightening device, as said in one or more previous claims, including the box (fig. 8) where the said box (fig. 8) sized as said in claim 10,

12. Lightening device, as said in claim 11, including couplings (814) in elastic plastic or elastic metal, of size, geometry and elasticity compatible with requirements of the to-day standard frames of electrical sockets and matchable with a single hollow of the said standard frames or support.

13. Lightening device, as said in claim 10 or claim 11 where the front (804) includes a window , flat or curved as a lens, as a Fresnel lens, convergent or divergent, where surface(s) and/or the material is transparent or scattering.
